# EUROPÄISCHE PATENTANMELDUNG

(11) **EP 3 162 866 A2**
(43) Veröffentlichungstag der Anmeldung: **03.05.2017**
(21) Anmeldenummer: 16192831.2
(22) Anmeldetag: 07.10.2016
(51) Int. Cl.: C09J 133/00

(54) **KLEBER, VERWENDUNG EINES KLEBERS UND VERFAHREN AUSSCHLIESSLICH FÜR DIE KALTFOLIENVEREDELUNG**

(30) Priorität: 09.10.2015 DE 102015117261
(71) Anmelder: Weilburger Graphics GmbH, 91466 Gerhardshofen (DE)
(72) Erfinder: Richter, Jutta, 90469 Nürnberg (DE)
(74) Vertreter: Tergau & Walkenhorst Patentanwälte - Rechtsanwälte

(57) **Zusammenfassung**

Kleber, Verwendung des Klebers und Verfahren ausschließlich für die Kaltfolienveredelung bzw. die Kaltfolienapplikation mit folgenden Eigenschaften:
Glasübergangstemperatur tg: - 40 °C bis - 20 °C
Festkörpergehalt: 50 Gew.% - 70 Gew.%
sowie folgende Additive:
Silikontensid als Netzmittel
Polyethersiloxan-Copolymer als Entschäumer,
25 Gew.% Salmiakgeist und
Wasser.

## Beschreibung

Die vorliegende Erfindung betrifft einen Kleber, die Verwendung bestimmter Druckwerke und ein Verfahren jeweils zur Kaltfolienveredelung.

Bei der Kaltfolienveredelung bzw. Kaltfolienapplikation wird nach dem Stand der Technik üblicherweise mit Hilfe eines Offset-Druckwerks ein sogenannter Kleber auf ein Substrat aufgetragen. Das Substrat kann aus beliebigen Werkstoffen bestehen. Die Erfindung eignet sich also zum Auftragen von Kleber auf Substrate, die auch nach dem Stand der Technik mit Hilfe der Kaltfolientechnik veredelt werden. Insbesondere eignet sich das Verfahren der Kaltfolienveredelung zum Bedrucken hochwertiger Verpackung beziehungsweise von Verpackungen für hochwertige Verbrauchsgüter, beispielsweise Kosmetika, Lebensmittel, Tierfutter, Zigaretten.

Beim herkömmlichen Verfahren für die Kaltfolienveredelung mittels einer Offset-druckmaschine wird - wie bei Offset-Druckwerken üblich - ein Farbwerk und ein Feuchtwerk eingesetzt, wobei in das Farbwerk anstelle einer konventionellen Druckfarbe eine lasierend eingefärbte, sehr zügige, also klebrige Druckfarbe als Kleber eingefüllt wird. Das Feuchtwerk ist mit Wasser oder anderen Flüssigkeiten befüllt, welche dafür sorgen, dass die nicht druckenden Bereiche der Druckplatte frei vom Kleber bleiben (Nass-Offset-Verfahren). Für das Auftragen eines solchen Klebers mit einer Offset-Druckmaschine ist analog zu den konventionellen Druckfarben eine sehr hohe Viskosität nötig. Die Rezepturen für derart hochviskose Kleber basieren entweder auf Öl oder sind sogenannte UV-härtende Kleber.

Bei der Kaltfolienveredelung wird das am Ende des Produktionsprozesses auf dem Substrat sichtbare Druckmotiv so aufgetragen, dass die mit Metall- oder Farbschicht zu versehenden Bereiche mit einem sogenannten Kleber beschichtet sind und die am Ende nicht mit Metallpartikeln zu versehenden, metallpartikelfreien Bereiche vom Feuchtwerk von diesem Kleber frei gehalten werden.

Nach der Aufbringung eines derartigen, beispielsweise aus der US 6 998 453 B1 bekannten Klebers durchläuft das Substrat ein weiteres Druckwerk, bei welchem mit Hilfe des Gummidruckzylinders eine metallisierte Folie auf das Substrat aufgedrückt wird. In Folge der Adhäsionskraft des Klebers wird die zu übertragende metallisierte oder farbige Schicht von der Kaltfolie ablöst und vom Kleber auf dem Substrat gehalten. Das so mit der metallisierten oder farbigen Schicht versehene Substrat kann in weiteren nachgestalteten Offset-Druckwerken mit weiteren Farben bedruckt werden. Auf diese Weise ist es möglich, dass erwünschte hochwertige Verpackungsdruckbild zu schaffen.

Nachteilig bei bekannten ölbasierten Klebern ist der vom verwendeten Öl verursachte Eigengeruch des Klebers. Dieser Eigengeruch ist beim Verpacken von geruchsempfindlichen Gütern, insbesondere den vorerwähnten Lebensmitteln, Tierfutter, Zigarren und Zigaretten unerwünscht. Außerdem haben diese ölbasierten Kleber lange Trocknungszeiten, was die Weiterverarbeitung verzögert, da die für die Weiterverarbeitung erforderliche mechanische Beständigkeit erst nach einer Durchtrocknung realisiert ist. Insbesondere enthalten Öldruckkleber für die Kaltfolienveredelung Lebensmittelverpackungen Öle mit gering vernetzenden Komponenten, die nur sehr langsam trocknen.

Nachteilig ist auch die geringe mit einem Offset-Druckwerk auf das Substrat auftragbare Klebermenge. Da nur sehr wenig Kleber appliziert werden kann (max. 2g/m²), muss das Substrat sehr glatt sein, damit nach dem Folientransfer der metallische Glanz der übertragenen Aluminiumpartikel, Metall- oder Farbpartikel bzw.-schicht erreicht wird. Weniger glatte Substrat- oder Kartonoberflächen mit höherer Porosität bzw. höherer Rauigkeit führen zu Glanzverlusten. Ein höherer Kleberauftrag könnte solche Oberflächen glätten und den Glanz erhöhen, ist aber aus technischen Gründen beim Offset-Verfahren nicht möglich.

Alternativ zum Offsetverfahren gibt es noch die beispielsweise aus der DE 10 2012 112 556 bekannte Möglichkeit, über ein Flexodruckwerk Kleber zu applizieren. Dies wird hauptsächlich bei Druckerzeugnissen im Schmalbahnflexoverfahren angewendet.

Stand der Technik ist hier jedoch die Verwendung eines UV-Lacksystems als Kleberkomponente. Bei diesem Verfahren wird nach der Lackapplikation erst die Kaltfolie angedrückt und dann der Lack mit UV-Stahlen durch die Folie gehärtet. Durch den UV-induzierten Polymerisationsprozess werden die Metallpartikel an der Lackoberfläche festgehalten und von der Trägerfolie abgelöst. Die hierfür verwendeten Kaltfolien müssen so aufgebaut sein, dass die UV-Strahlung noch gut transmittieren kann. Dies führt jedoch zu Einschränkungen bei der Folienauswahl. Auch bei diesem Verfahren gibt es Limitationen in Hinblick auf Lebensmittelverpackungen.

Ausgehend von diesen Nachteilen liegt der Erfindung die Aufgabe zugrunde, einen geeigneteren, echten Kleber für geruchsempfindliche Füllgüter anzugeben.

Diese Aufgabe ist durch den Kleber gemäß den Ansprüchen 1 bis 5, deren in den Ansprüchen 6 und 7 angegebene Verwendung sowie das Verfahren gemäß den Ansprüchen 8 und 9 in erfinderischer Weise gelöst.

Zunächst besteht die Erfindung in einem einkomponentigen Kleber beziehungsweise Klebersystem als Ersatz für die im Offsetverfahren verwendeten ölbasierten Kleber. Es handelt sich um einen wässrigen Kleber, welcher im nassen Zustand geruchsarm und nach der physikalischen Trocknung geruchsfrei ist. Dies führt zu einer deutlich besseren Sensorik des Druckerzeugnisses. Die Haftung der bei der Kaltfolienveredelung zu übertragenden metallischen oder farbigen Schicht und die Nassblockfestigkeit ist im Vergleich zum oben erwähnten konventionellen Kleber nach dem Stand der Technik deutlich besser. Die Weiterverarbeitung des mit dem erfindungsmäßigen Kleber versehenen Druckerzeugnisses ist deutlich schneller möglich und damit einfacher und vorteilhaft gegenüber dem Stand der Technik. Die Zusammensetzung bzw. Rezeptur des Klebers beruht auf der Grundüberlegung einen wässrigen Standard-Kaschierkleber, zu modifizieren. Diese Kaschierkleber werden im Nasskaschierverfahren auf Kunststofffolie appliziert, getrocknet und dann mit dem bedruckten Karton oder Papier unter Druck zusammengefügt.

In der Standardanwendung nach dem Stand der Technik wird der Kaschierkleber auf nichtsaugende Untergründe aufgetragen. Bei der Erfindung hingegen wird der Kleber mittels eines vorgeschalteten Flexodruckwerks (Lackwerk) auf saugende Untergründe (Karton, Papier) aufgetragen. Ein Standard-Kaschierkleber nach dem Stand der Technik würde dabei viel zu schnell in das Substrat wegschlagen, so dass für die Verklebung an der Oberfläche nicht mehr genügend Kleber vorhanden wäre. Gemäß der vorliegenden Erfindung wird ein Standardbindemittel für einen Kaschierkleber mit einem für die Formulierung von Haftklebestoffen geeigneten Bindemittel kombiniert. Derartige Haftklebestoffe (pressure sensitive adhesive) werden beispielsweise für Selbstklebeetiketten verwendet. Die Adhäsionskraft derartiger Haftklebestoffe ist höher. Außerdem bleiben die Haftklebestoffe aufgrund ihrer verglichen mit Standard-Kaschierklebern wesentlich breiteren Partikelgrößenverteilung besser auf der Oberfläche des Substrats stehen, schlagen also nicht so schnell in den Untergrund weg.

Beim erfindungsmäßigen Kleber handelt es sich um eine Mischung aus verschiedenen wässrigen Acrylat-Co-Polymerdispersionen mit folgenden Eigenschaften:
Glasübergangstemperatur tg: - 40 Grad Celsius bis - 20 Grad Celsius. Der Festkörpergehalt liegt zwischen 50 Gew.-% und 70 Gew.-%. Die Viskosität liegt zwischen 65 mPa ·s und 1.100 mPa ·s. Das Molekulargewicht ist kleiner als 10.000 g/mol.

Zu dieser Bindemittelmischung werden noch folgende Additive hinzugefügt: als Netzmittel Silikontensid, als Entschäumer Polyethersiloxan-Copolymer sowie Salmiakgeist (25 %) und Wasser zur Einstellung der Viskosität auf die gewünschte Fließfähigkeit.

Die Zugabe von 25%igem Ammoniak zieht einen pH-Wert des Klebers im sogenannten neutralen Bereich nach sich und erhöht die Viskosität des erfindungsmäßigen Klebersystems. Ohne diese Neutralisation läge der pH-Wert im sauren Bereich und dies würde zu Korrosionserscheinungen im Flexowerk führen. Die niedrige Viskosität würde zum Spritzen bei der Übertragung führen. Beide Effekte sind unerwünscht.

Die Spezifikation des erfindungsmäßigen Klebers, also der fertigen Zubereitung ist folgende:
Die Auslaufzeit in Sekunden aus einem DIN 4 mm-Becher bei einer Temperatur von 20 Grad Celsius beträgt 30 Sekunden bis 100 Sekunden. Der pH-Wert liegt in einem Bereich von 7,0 bis 9,0.

Folgende Beispielrezepturen werden für den erfindungsmäßigen Kleber angegeben:

**Rezeptur 1:**

| Komponente | Gehalt in Gew.% |
|---|---|
| Kombination von wässrigen Acrylat-Coplymer-Dispersionen | 98 |
| Entschäumer | 0,9 |
| Netzmittel | 0,4 |
| Salmiakgeist 25% | 0,7 |
| Wasser | |

**Rezeptur 2:**

| Komponente | Gehalt in Gew.% |
|---|---|
| Kombination von wässrigen Acrylat-Coplymer- und Vinylacetat-Ethylen-Dispersionen | 93 |
| Entschäumer | 0,9 |
| Netzmittel | 0,4 |
| Salmiakgeist 25% | 0,7 |
| Glycerintriacetat | 5 |

Für den Auftrag des erfindungsmäßigen Klebers beziehungsweise Klebersystems eignen sich Flexodruckwerke einerseits und Druckköpfe digitaler Druckwerke andererseits.

Bei der Verwendung eines Flexodruckwerks, also eines indirekten Hochdruckverfahrens wird durch die Auswahl verschiedenster Rasterwalzen mit unterschiedlichen Schöpfvolumina die gewünschte Klebermenge eingestellt. Vorteilhaft können auch weniger glatte Substratoberflächen, insbesondere Kartonoberflächen bedruckt werden, ohne dass es zu Glanzverlusten führt. Mit dem erfindungsmäßigen Klebersystem ist es auch möglich, Substratoberflächen zu glätten und den Glanz zu erhöhen.

Bei der digitalen Applikation mit einem Druckkopf kann durch die Auswahl eines geeigneten Druckkopfes und einer geeigneten Druckparametrierung die nötige Auftragsstärke an das Substrat angepasst werden. Der Kleber weist eine so niedrige Viskosität auf, dass er mit Hilfe eines Flexodruckverfahrens oder eines digitalen Druckkopfs auf das Substrat aufgebracht werden kann, er zugleich aber eine ausreichende Adhäsionswirkung entfaltet, um die metallisierte oder farbige Schicht bzw. die Metallpartikel bei der nachgeschalteten Kaltfolienveredelung aus der Folie zu lösen und auf dem Substrat dauerhaft zu halten.

Bei dem erfindungsmäßigen Flexodruckverfahren wird zunächst der wässrige Kleber in das Kammerrakel der Rasterwalze eingebracht. Die übertragene Klebermenge ist durch das Schöpfvolumen der Rasterwalze vorgegeben. Die Rasterwalze überträgt den Kleber auf die Flexo-Druckplatte. Die Flexo-Druckplatte überträgt das Kleberraster ihrerseits auf das Substrat, welches in einem weiteren Verfahrensschritt die metallisierte oder farbige Schicht bzw. metallische oder farbige Partikel aus der zwischen Druckzylinder und Gegendruckzylinder auf das Substrat aufgedrückten Folie löst. Die Folie wird anschließend vom Substrat weggeführt, so dass das mit der metallisierten oder farbigen Schicht bzw. den metallischen oder farbigen Partikeln versehene Substrat mit Hilfe weiterer Druckgänge mit Farbe bedruckt und abschließend überlackiert werden kann.

Das Verfahren mit einem digitalen Druckkopf unterscheidet nur dadurch vom vorstehend geschilderten Kleberauftrag mit Flexodruckverfahren, dass das Kleberraster mit Hilfe des digitalen Druckkopfs aufgebracht wird und anschließend wiederum die metallisierte oder farbige Schicht bzw. metallische oder farbige Partikel mit Hilfe der Anhaftung der entsprechenden Folienbereiche aus der Folie gelöst werden.

## Patentansprüche

1. Kleber ausschließlich für die Kaltfolienapplikation bzw. Kaltfolienveredelung mit folgenden Eigenschaften:
Glasübergangstemperatur tg: - 40 °C bis - 20 °C
Festkörpergehalt: 50 Gew.% - 70 Gew.%
sowie folgende Additive:
Silikontensid als Netzmittel
Polyethersiloxan-Copolymer als Entschäumer, 25 Gew.% Salmiakgeist und
Wasser.

2. Kleber nach Anspruch 1 mit folgenden weiteren Eigenschaften:
Viskosität < 1500 mPa ·s
Molekulargewicht < 10.000 g/mol.

3. Kleber nach Anspruch 1 oder 2
mit einer Viskosität zwischen 65 mPa ·s - 1.100 mPa ·s und einem pH-Wert von 7,0 bis 8,5.

4. Kleber mit folgender Rezeptur:
| Komponente | Gehalt in Gew.% |
|---|---|
| Kombination von wässrigen Acrylat-Coplymer-Dispersionen | 98 |
| Entschäumer | 0,9 |
| Netzmittel | 0,4 |
| Salmiakgeist 25% | 0,7 |

5. Kleber mit folgender Rezeptur:
| Komponente | Gehalt in Gew.% |
|---|---|
| Kombination von wässrigen Acrylat-Coplymer- und Vinylacetat-Ethylen-Dispersionen | 93 |
| Entschäumer | 0,9 |
| Netzmittel | 0,4 |
| Salmiakgeist 25% | 0,7 |
| Glycerintriacetat | 5 |

6. Verwendung eines Klebers nach einem der Ansprüche 1 bis 5 zur Applikation auf ein Substrat in einem vordefinierten Kleberraster mittels eines vorgeschalteten Flexodruckwerks an einer Offset-Druckmaschine oder einer Flexodruckmaschine.

7. Verwendung eines Klebers nach einem der Ansprüche 1 bis 5 zur Applikation auf ein Substrat in einem vordefinierten Kleberraster mittels eines Digitaldruckwerks, insbesondere eines Tintenstrahldruckers.

8. Kaltfolienveredelungsverfahren unter Verwendung eines Klebers nach einem der Ansprüche 1 bis 5 mit folgenden Verfahrensschritten:
- Einfüllen eines wässrigen Klebers, insbesondere eines Klebers nach den Ansprüchen 1 oder 2 in die Rakel-/Schöpfkammern einer Rasterwalze.
- Auftragen des Kleberrasters auf eine Druckplatte, welche ihrerseits auf einem Druckzylinder adaptiert ist,
- Auftragen des Kleberraster von der Druckplatte auf das Substrat mit Hilfe eines Gegendruckzylinders sowie
- Durchleitung der Kaltfolie und des Substrats durch eine Anordnung von Druckzylinder und Gegendruckzylinder, wobei der Kleber in Folge seiner Adhäsionskraft die zu übertragende metallisierte oder farbige Schicht von der Kaltfolie ablöst und dauerhaft auf dem Substrat appliziert.

9. Kaltfolienveredelungsverfahren unter Verwendung eines Klebers nach einem der Ansprüche 1 bis 5 mit folgenden Verfahrensschritten:
- Auftragen des wässrigen Klebers nach einem der Ansprüche 1 bis 5, in einem vordefinierten Kleberraster mit einem Digitaldruckwerk auf ein Substrat in einem ersten Verfahrensschritt und
- Ablösen der zu übertragenden metallisierten oder farbigen Schicht von der Kaltfolie und applizieren durch Anhaften im vordefinierten Kleberaster auf der Oberfläche des Substrats in einem zweiten Verfahrensschritt.
